# EUROPEAN PATENT APPLICATION

(11) **EP 4 624 241 A1**
(43) Date of publication of application: **01.10.2025**
(21) Application number: 23893976.3
(22) Date of filing: 23.11.2023
(51) Int. Cl.: B60L 58/27

(54) **ENERGY CONVERSION DEVICE AND VEHICLE**

(30) Priority: 25.11.2022 CN 202211493632
(71) Applicant: BYD Company Limited, Shenzhen, Guangdong 518118 (CN)
(72) Inventor: LIU, Changjiu, Shenzhen, Guangdong 518118 (CN); YAN, Lei, Shenzhen, Guangdong 518118 (CN); ZHAO, Jin, Shenzhen, Guangdong 518118 (CN); GAO, Wen, Shenzhen, Guangdong 518118 (CN)
(74) Representative: Mathys & Squire
(86) International application number: PCT/CN2023/133714
(87) International publication number: WO 2024/109887

(57) **Abstract**

An energy conversion device and a vehicle. The energy conversion device (100) comprises: a first battery pack (1); a first inductor (L1), a first end of the first inductor (L1) being connected to a positive electrode of the first battery pack (1); a first bridge arm (2), the midpoint of the first bridge arm (2) being connected to a second end of the first inductor (L1), and a first end of the first bridge arm (2) being connected to a negative electrode of the first battery pack (1); a second battery pack (3), a positive electrode of the second battery pack (3) being connected to a second end of the first bridge arm (2), and a negative electrode of the second battery pack (3) being connected to a first end of the first bridge arm (2); and a controller (4), the controller (4) being connected to the first bridge arm (2), and the controller (4) being configured to: in a first state, control the first bridge arm (2) such that the first battery pack (1) and the second battery pack (3) may alternately charge and discharge, allowing for heating of the first battery pack (1) and the second battery pack (3). **In** the energy conversion device (100), the first battery pack (1) and the second battery pack (2) function cooperatively, allowing for high system stability; in low temperatures, oscillatory heating is applied to the first battery pack (1) and the second battery pack (2), ensuring battery charging and discharging performance.

## Description

### CROSS-REFERENCE TO RELATED APPLICATIONS

The present disclosure claims priority to Chinese Patent Application No. 202211493632.7, titled "ENERGY CONVERSION DEVICE AND VEHICLE" and filed on November 25, 2022, and the entire content of the above-referenced application is incorporated herein by reference.

### FIELD

The present disclosure relates to the technical field of electric vehicles, and more specifically to, an energy conversion device and a vehicle.

### BACKGROUND

With the development of electric vehicles, people are placing increasingly higher demands on electric vehicles. In order to ensure the optimal all-weather performance of electric vehicles and to achieve strong performance even at low temperatures, it is necessary to heat a low-temperature battery to ensure that it operates at the optimal temperature. When a power battery is in low-temperature environments below -10°C, the activity of positive and negative electrode materials and electrolyte of the battery decreases, and its charging and discharging performance significantly decreases. Therefore, how to improve the charging and discharging performance of power batteries in low-temperature environments is an urgent technical problem that needs to be solved.

### SUMMARY

A purpose of the present disclosure is to provide an energy conversion device. In the device, a first battery pack and a second battery pack function cooperatively in a redundant configuration, allowing for extremely high system robustness; and the first battery pack and the second battery pack have different chemical characteristics, thus making the vehicle meet the requirements of fast acceleration and long mileage range. Oscillatory heating is applied to the batteries at low temperatures, ensuring the charging and discharging performance of the batteries.

In order to achieve the purpose, according to a first aspect, an embodiment of the present disclosure provides an energy conversion device, including: a first battery pack; a first inductor, a first end of the first inductor being connected to a positive electrode of the first battery pack; a first bridge arm, a midpoint of the first bridge arm being connected to a second end of the first inductor, and a first end of the first bridge arm being connected to a negative electrode of the first battery pack; a second battery pack, a positive electrode of the second battery pack being connected to a second end of the first bridge arm, and a negative electrode of the second battery pack being connected to the first end of the first bridge arm; and a controller, the controller being connected to the first bridge arm and the controller being configured to: control the first bridge arm in a first state to cause the first battery pack and the second battery pack to alternately charge and discharge to heat the first battery pack and the second battery pack.

In the energy conversion device provided in this embodiment of the present disclosure, the first battery pack and the second battery pack function cooperatively, allowing for high system stability. Oscillatory heating is applied to the first battery pack and the second battery pack at low temperatures, thus ensuring the charging and discharging performance of the batteries.

In addition, the energy conversion device provided in this embodiment of the present disclosure may further have the following additional technical features:

According to an embodiment of the present disclosure, the controller is configured to: in the first state, control the first bridge arm in a first half cycle of a control cycle to cause the first battery pack to discharge and the second battery pack to charge; and control the first bridge arm in a second half cycle of the control cycle to cause the first battery pack to charge and the second battery pack to discharge.

According to an embodiment of the present disclosure, the controller is configured to: in the first state, control an upper switch group of the first bridge arm to be off and a lower switch group of the first bridge arm to be on in a first time period of the first half cycle to cause the first battery pack to discharge and the first inductor to store energy; and control the upper switch group of the first bridge arm to be on and the lower switch group of the first bridge arm to be off in a second time period of the first half cycle to cause the first battery pack to discharge, the first inductor to release the stored energy, and the second battery pack to charge.

According to an embodiment of the present disclosure, the controller is configured to: in the first state, control the upper switch group of the first bridge arm to be on and the lower switch group of the first bridge arm to be off in a first time period of the second half cycle to cause the second battery pack to discharge, the first inductor to store energy, and the first battery pack to charge; and control the upper switch group of the first bridge arm to be off and the lower switch group of the first bridge arm to be on in a second time period of the second half cycle to cause the first inductor to release the stored energy and the first battery pack to charge.

According to an embodiment of the present disclosure, the second battery pack includes a first battery module and a second battery module connected in series, a positive electrode of the first battery module is connected to the second end of the first bridge arm, and a negative electrode of the second battery module is connected to the first end of the first bridge arm. The energy conversion device further includes: at least one phase of second bridge arm, a first end of the second bridge arm being connected to the negative electrode of the second battery module, and a second end of the second bridge arm being connected to the positive electrode of the first battery module; and at least one phase of second inductor, a first end of the second inductor being connected to a midpoint of the corresponding second bridge arm, and a second end of the second inductor being connected to midpoints of the first battery module and the second battery module. The controller is connected to the second bridge arm and the controller is configured to: control the second bridge arm in a second state to cause the first battery module and the second battery module to alternately charge and discharge to heat the first battery module and the second battery module.

According to an embodiment of the present disclosure, the controller is configured to: in the second state, control the second bridge arm in a first half cycle of a control cycle to cause the first battery module to discharge and the second battery module to charge; and control the second bridge arm in a second half cycle of the control cycle to cause the first battery module to charge and the second battery module to discharge.

According to an embodiment of the present disclosure, the controller is configured to: in the second state, control an upper switch group of the second bridge arm to be on and a lower switch group of the second bridge arm to be off in a first time period of the first half cycle to cause the first battery module to discharge and the second inductor to store energy; and control the upper switch group of the second bridge arm to be off and the lower switch group of the second bridge arm to be on in a second time period of the first half cycle to cause the second inductor to release the stored energy and the second battery module to charge.

According to an embodiment of the present disclosure, the controller is configured to: in the second state, control an upper switch group of the second bridge arm to be off and a lower switch group of the second bridge arm to be on in a first time period of the second half cycle to cause the second battery module to discharge and the second inductor to store energy; and control the upper switch group of the second bridge arm to be on and the lower switch group of the second bridge arm to be off in a second time period of the second half cycle to cause the second inductor to release the stored energy and the first battery module to charge.

According to an embodiment of the present disclosure, a bridge arm of a motor controller is reused as the second bridge arm and a coil of a motor is reused as the second inductor.

According to an embodiment of the present disclosure, the energy conversion device further includes: a DC charging port; and a switching circuit, a first end of the switching circuit being connected to a positive electrode of the DC charging port, and a second end of the switching circuit being selectively connected to the positive electrode of the first battery pack and the positive electrode of the second battery pack.

According to an embodiment of the present disclosure, the controller is connected to the switching circuit and the controller is configured to: in a third state, control the switching circuit to be connected to the positive electrode of the first battery pack to charge the first battery pack, and control the first bridge arm to supply power to the second battery pack.

According to an embodiment of the present disclosure, the controller is connected to the switching circuit and the controller is configured to: in a fourth state, control the switching circuit to be connected to the positive electrode of the second battery pack to charge the second battery pack, and control the first bridge arm to supply power to the first battery pack.

According to an embodiment of the present disclosure, the first battery pack is an energy type battery, the second battery pack is a power type battery, and a charging and discharging rate of the power type battery is greater than a charging and discharging rate of the energy type battery.

According to an embodiment of the present disclosure, the energy conversion device further includes: a switching element, a first end of the switching element being connected to midpoints of the first battery module and the second battery module, and a second end of the switching element being connected to an N line led out from the motor.

According to an embodiment of the present disclosure, the controller is configured to: control the motor controller to store braking feedback energy in the second battery pack; or, control the motor controller and the first bridge arm to store braking feedback energy in the first battery pack.

In order to achieve the purpose, according to a second aspect, an embodiment of the present disclosure provides a vehicle, including the energy conversion device provided in the embodiment of the present disclosure according to the first aspect.

In the energy conversion device provided in this embodiment of the present disclosure, the first battery pack and the second battery pack may be alternately heated in low-temperature environments, thus achieving the simultaneous heating of the first battery pack and the second battery pack. The second battery pack may also be self-heated, thus ensuring the charging and discharging performance of the batteries by heating the first battery pack and the second battery pack in low-temperature environments. The first battery pack and the second battery pack of different chemical forms are adopted to overcome the shortcomings of any form of power battery when providing power energy to the vehicle, thus making the vehicle have better power performance and meet the requirement on the mile range. The first battery pack and the second battery pack function cooperatively in a redundant configuration. When one battery fails, a system can still work normally, thus improving the system stability and achieving extremely high robustness. The first battery pack and the second battery pack may supply power to a load separately or jointly according to the load input requirement. The load may feed back energy to the first battery pack and the second battery pack separately or simultaneously according to the actual situation. The high-voltage load is supplied with power through different power sources (the first battery pack and the second battery pack).

### BRIEF DESCRIPTION OF THE DRAWINGS

FIG. 1 is circuit diagram of an energy conversion device according to an embodiment of the present disclosure;
FIG. 2 is a circuit diagram of an energy conversion device according to another embodiment of the present disclosure;
FIG. 3(a), FIG. 3(b), FIG. 3(c), and FIG. 3(d) are schematic diagrams of processes that a first battery pack and a second battery pack are alternately heated by each other according to an embodiment of the present disclosure;
FIG. 4(a), FIG. 4(b), FIG. 4(c), and FIG. 4(d) are schematic diagrams of processes that a second battery pack is self-heated according to an embodiment of the present disclosure;
FIG. 5 is a circuit diagram of connecting a DC charging port with a first battery pack and a second battery pack according to an embodiment of the present disclosure;
FIG. 6(a), FIG. 6(b), and FIG. 6(c) are schematic diagrams of processes that a first battery pack charges according to an embodiment of the present disclosure;
FIG. 7(a) and FIG. 7(b) are schematic diagrams of processes that a second battery pack charges according to an embodiment of the present disclosure;
FIG. 8 is a schematic diagram of a process that a high-voltage load feeds back energy to a second battery pack according to an embodiment of the present disclosure;
FIG. 9 is a schematic diagram of a process that a high-voltage load feeds back energy to a first battery pack according to an embodiment of the present disclosure;
FIG. 10(a) and FIG. 10(b) are schematic diagrams of processes that a second battery pack discharges at high power according to an embodiment of the present disclosure;
FIG. 11(a) and FIG. 11(b) are schematic diagrams of processes that a first battery pack discharges at high power according to an embodiment of the present disclosure; and
FIG. 12 is a schematic diagram of a vehicle according to an embodiment of the present disclosure.

In the drawings:
1: first battery pack; 2: first bridge arm; 3: second battery pack; 4: controller; 5: second bridge arm; 6: DC charging port; 7: first switch; 8: second switch; 9: switching element; 10: high-voltage load; 31: first battery module; 32: second battery module; and 100: energy conversion device.

### DETAILED DESCRIPTION

Embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, are intended to explain the present disclosure and cannot be construed as limitations on the present disclosure.

An energy conversion device and a vehicle according to embodiments of the present disclosure will be described in detail below in combination with the accompanying drawings of the specification and specific implementations.

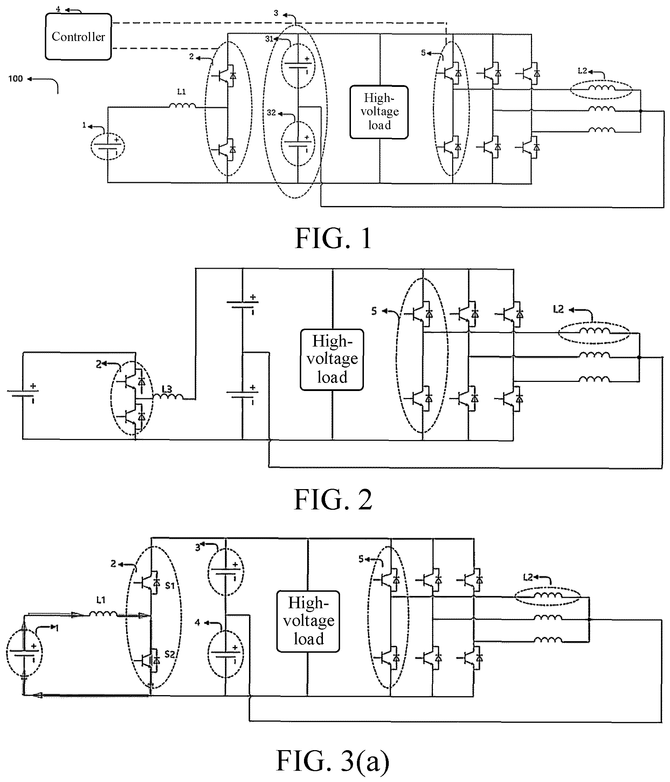

FIG. 1 is circuit diagram of an energy conversion device according to an embodiment of the present disclosure. As shown in FIG. 1, the energy conversion device 100 may include: a first battery pack 1; a first inductor L1, a first end of the first inductor L1 being connected to a positive electrode of the first battery pack 1; a first bridge arm 2, a midpoint of the first bridge arm 2 being connected to a second end of the first inductor L1, and a first end of the first bridge arm 2 being connected to a negative electrode of the first battery pack 1; a second battery pack 3, a positive electrode of the second battery pack 3 being connected to a second end of the first bridge arm 2, and a negative electrode of the second battery pack 3 being connected to the first end of the first bridge arm 2; and a controller 4, the controller 4 being connected to the first bridge arm 2 and the controller 4 being configured to: control the first bridge arm 2 in a first state to cause the first battery pack 1 and the second battery pack 3 to alternately charge and discharge to heat the first battery pack 1 and the second battery pack 3.

In an embodiment of the present disclosure, the first battery pack 1 and the second battery pack 3 are mutually different chemical forms of power batteries. Exemplarily, the different chemical forms of power batteries are a power type battery and an energy type battery. The power type battery can provide instant high energy output, and has a small compaction density and surface density to ensure the instant rapid movement of lithium ions, thus instantly releasing huge energy. However, at the same time, within the same volume, the overall energy of the power type battery decreases. The energy type battery often has high compaction density and surface density in order to store more energy in the same volume. However, at the same time, it also means greater internal resistance. The rapid movement ability of lithium ions is limited, which means that the ability to instantly release large currents is limited.

In an embodiment of the present disclosure, the first battery pack 1 and the second battery pack 3 of different chemical forms are adopted, and the first inductor L1 and the first bridge arm 2 are utilized to achieve the energy transmission between the first battery pack 1 and the second battery pack 3 of different chemical forms to overcome the shortcomings of any form of power battery when providing power energy to the vehicle, thus making the vehicle have better power performance and meet the requirement on the mile range.

In this embodiment of the present disclosure, the energy conversion device 100 that adopts the first battery pack 1 and the second battery pack 3 of different chemical forms can simultaneously achieve the advantages of the power type battery and the energy type battery, which can not only meet the instant high-power electricity demand of the load, but also have an ultra-long mile range (the energy type battery has ultra-large capacity).

In an embodiment of the present disclosure, the second battery pack 3 of the power type and the first battery pack 1 of the energy type function cooperatively in a redundant configuration. The first battery pack 1 and the second battery pack 3 may supply power to the load separately or jointly according to the load input requirement. The load may feed back energy to the first battery pack 1 and the second battery pack 3 separately or simultaneously according to the actual situation.

In an embodiment of the present disclosure, the first battery pack 1 is an energy type battery, the second battery pack 3 is a power type battery, and the charging and discharging rate of the power type battery is greater than the charging and discharging rate of the energy type battery.

In some embodiments, the first battery pack 1 is an energy type battery, and the second battery pack 3 is a power type battery. When a voltage of the second battery pack 3 is higher than a voltage of the first battery pack 1, the first bridge arm 2 may adopt a boost DC (Direct Current) circuit, referring to FIG. 1. The first bridge arm 2 shown in FIG. 1 is a boost circuit, and its topology is not limited to a circuit structure shown in FIG. 1.

It is to be noted that the voltage of the second battery pack 3 may be higher than the voltage of the first battery pack 1, or may also be lower than the voltage of the first battery pack 1. When the voltage of the second battery pack 3 is lower than the voltage of the first battery pack 1, the first bridge arm 2 may adopt a buck DC circuit, referring to FIG. 2. In FIG. 2, the first bridge arm 2 is connected to a third inductor L3. The first bridge arm 2 shown in FIG. 2 is a buck circuit, and its topology is not limited to a circuit structure shown in FIG. 2. Other circuit forms that can achieve the above voltage boost and buck functions are also acceptable.

In an embodiment of the present disclosure, the controller 4 is configured to: in the first state, control the first bridge arm 2 in a first half cycle of a control cycle to cause the first battery pack 1 to discharge and the second battery pack 3 to charge; and control the first bridge arm 2 in a second half cycle of the control cycle to cause the first battery pack 1 to charge and the second battery pack 3 to discharge.

In some embodiments, when the temperature of the first battery pack 1 and the second battery pack 3 is too low, the energy conversion device 100 may be controlled to enter the first state, and the first battery pack 1 and the second battery pack 3 are alternately heated by each other by controlling the on and off of an upper switch group S1 and a lower switch group S2 of the first bridge arm 2, so as to simultaneously heat the first battery pack 1 and the second battery pack 3.

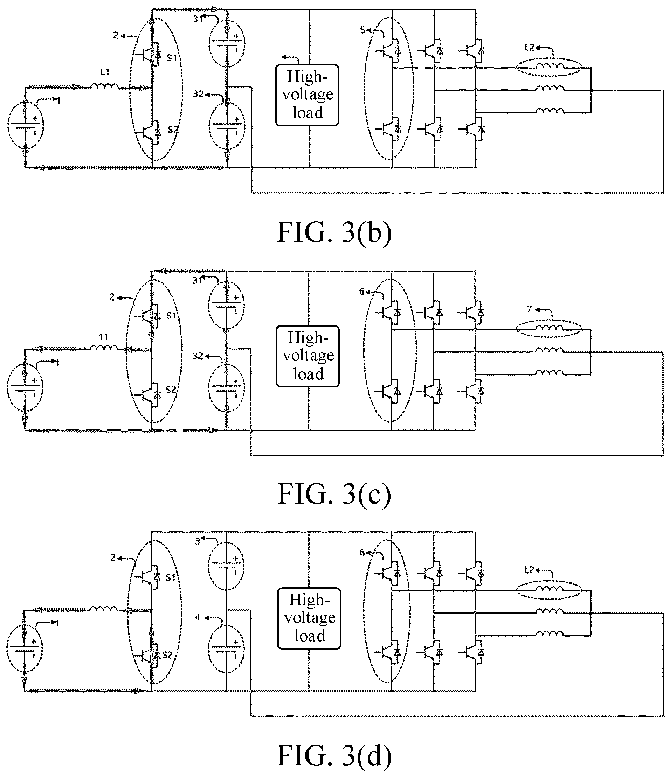

In an embodiment of the present disclosure, as shown in FIG. 3(a) and FIG. 3(b), the controller 4 may be configured to: in the first state, control the upper switch group S1 of the first bridge arm 2 to be off and the lower switch group S2 of the first bridge arm 2 to be on in a first time period of the first half cycle to cause the first battery pack 1 to discharge and the first inductor L1 to store energy; and control the upper switch group S1 of the first bridge arm 2 to be on and the lower switch group S2 of the first bridge arm 2 to be off in a second time period of the first half cycle to cause the first battery pack 1 to discharge, the first inductor L1 to release the stored energy, and the second battery pack 3 to charge.

When the first battery pack 1 and the second battery pack 3 are heated simultaneously, in the first time period of the first half cycle, the upper switch group S1 of the first bridge arm 2 may be controlled to be off, and the lower switch group S2 of the first bridge arm 2 may be controlled to be on to cause the first battery pack 1, the first inductor L1, and the lower switch group S2 of the first bridge arm 2 to form a loop (refer to FIG. 3(a)), the first battery pack 1 to discharge, and the first inductor L1 to store the energy from the first battery pack 1. In the second time period of the first half cycle, after the first inductor L1 completes energy storage, the upper switch group S1 of the first bridge arm 2 may be controlled to be on, and the lower switch group S2 of the first bridge arm 2 may be controlled to be off to cause the first battery pack 1, the first inductor L1, the upper switch group S1 of the first bridge arm 2, and the second battery pack 3 to form a loop (refer to FIG. 3(b)), and the current in the loop to charge the second battery pack 3 through the upper switch group S1 of the first bridge arm 2.

In an embodiment of the present disclosure, as shown in FIG. 3(c) and FIG. 3(d), the controller 4 may be configured to: in the first state, control the upper switch group S1 of the first bridge arm 2 to be on and the lower switch group S2 of the first bridge arm 2 to be off in a first time period of a second half cycle to cause the second battery pack 3 to discharge, the first inductor L1 to store energy, and the first battery pack 1 to charge; and control the upper switch group S1 of the first bridge arm 2 to be off and the lower switch group S2 of the first bridge arm 2 to be on in a second time period of the second half cycle to cause the first inductor L1 to release the stored energy and the first battery pack 1 to charge.

When the first battery pack 1 and the second battery pack 3 are heated simultaneously, in the first time period of the second half cycle, the upper switch group S1 of the first bridge arm 2 may be controlled to be on, and the lower switch group S2 of the first bridge arm 2 may be controlled to be off to cause the second battery pack 3, the upper switch group S1 of the first bridge arm 2, the first inductor L1, and the first battery pack 1 to form a loop (refer to FIG. 3(c)), the second battery pack 3 to discharge, and the first inductor L1 to store energy and simultaneously to charge the first battery pack 1. In the second time period of the second half cycle, after the first inductor L1 completes energy storage, the upper switch group S1 of the first bridge arm 2 may be controlled to be off, and the lower switch group S2 of the first bridge arm 2 may be controlled to be on to cause the first inductor L1, the first battery pack 1, and the lower switch group S2 of the first bridge arm 2 to form a loop (refer to FIG. 3(d)), and the first inductor L1 to transmit the stored energy to the first battery pack 1.

In an embodiment of the present disclosure, as shown in FIG. 1, the second battery pack 2 further includes a first battery module 31 and a second battery module 32 connected in series, a positive electrode of the first battery module 31 is connected to the second end of the first bridge arm 2, and a negative electrode of the second battery module 32 is connected to the first end of the first bridge arm 2. The energy conversion device 100 further includes: at least one phase of second bridge arm 5, a first end of the second bridge arm 5 being connected to the negative electrode of the second battery module 32, and a second end of the second bridge arm 5 being connected to the positive electrode of the first battery module 31; and at least one phase of second inductor L2, a first end of the second inductor L2 being connected to a midpoint of the corresponding second bridge arm 5, and a second end of the second inductor L2 being connected to midpoints of the first battery module 31 and the second battery module 32. The controller 4 is connected to the second bridge arm 5 and the controller 4 is configured to: control the second bridge arm 5 in a second state to cause the first battery module 31 and the second battery module 32 to alternately charge and discharge to heat the first battery module 31 and the second battery module 32. FIG. 1 shows a circuit diagram with three phases of second bridge arms 5 and three phases of second inductors L2.

In some embodiments, when the temperature of the first battery pack 1 and the second battery pack 3 is too low, the second battery pack 3 may be heated solely, the energy conversion device 100 may be controlled to enter the second state when the second battery pack 3 is heated solely, and the first battery module 31 and the second battery module 32 are alternately heated by controlling the on and off of the upper switch group S3 and the lower switch group S4 of the second bridge arm 5, so as to achieve the self-heating of the second battery pack 3.

In an embodiment of the present disclosure, the first battery module 31 and the second battery module 32 may be different battery modules, or may be the same battery module formed by splitting it into two.

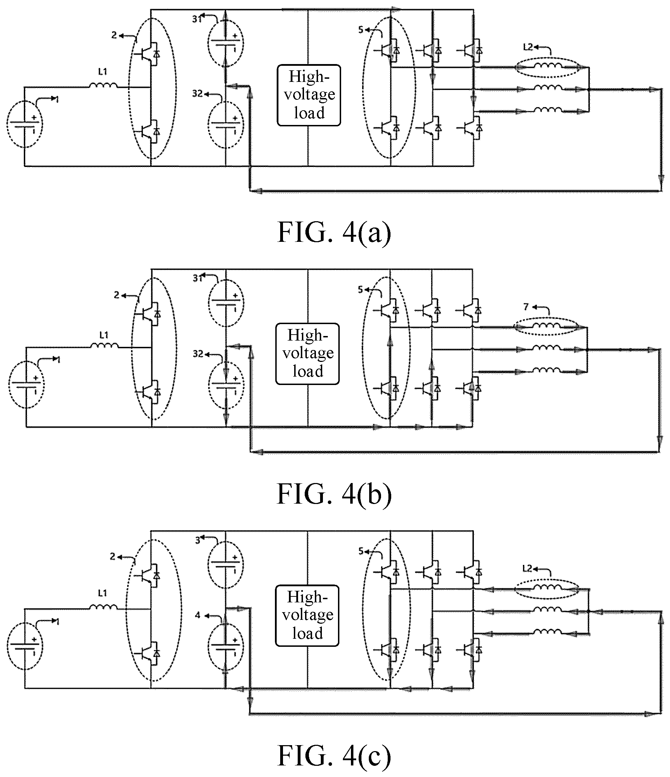

In an embodiment of the present disclosure, as shown in FIG. 4(a) and FIG. 4(b), the controller 4 may be configured to: in the second state, control the second bridge arm 5 in a first half cycle of a control cycle to cause the first battery module 31 to discharge and the second battery module 32 to charge; and control the second bridge arm 5 in a second half cycle of the control cycle to cause the first battery module 31 to charge and the second battery module 32 to discharge.

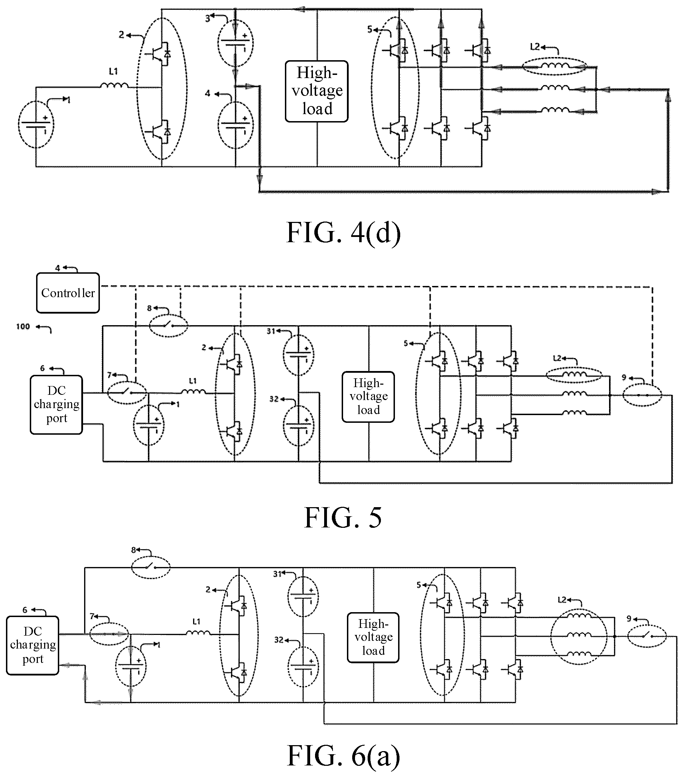

In an embodiment of the present disclosure, as shown in FIG. 4(a), FIG. 4(b), FIG. 4(c), and FIG. 4(d), the controller 4 is configured to: in the second state, control the upper switch group S3 of the second bridge arm 5 to be on and the lower switch group S4 of the second bridge arm 5 to be off in a first time period of the first half cycle to cause the first battery module 31 to discharge and the second inductor L2 to store energy; and control the upper switch group S3 of the second bridge arm 5 to be off and the lower switch group S4 of the second bridge arm 5 to be on in a second time period of the first half cycle to cause the second inductor L2 to release the stored energy and the second battery module 32 to charge.

When the self-heating of the second battery pack 3 is implemented, in the first time period of the first half cycle, the upper switch group S3 of the second bridge arm 5 may be controlled to be on, and the lower switch group S4 of the second bridge arm 5 may be controlled to be off to cause the first battery module 3, the upper switch group S3 of the second bridge arm 5, and the second inductor L2 to form a loop (refer to FIG. 4(a)), the first battery module 31 to discharge, and the second inductor L2 to store the energy from the first battery module 31. In the second time period of the first half cycle, after the second inductor L2 completes energy storage, the upper switch group S3 of the second bridge arm 5 may be controlled to be off, and the lower switch group S4 of the second bridge arm 5 may be controlled to be on to cause the second inductor L2, the second battery module 32, the lower switch group S4 of the second bridge arm 5, and the second battery module 32 to form a loop (refer to FIG. 4(b)), and the second inductor L2 to charge the second battery module 32.

In an embodiment of the present disclosure, as shown in FIG. 4(c) and FIG. 4(d), the controller 4 may be configured to: in the second state, control the upper switch group S3 of the second bridge arm 5 to be off and the lower switch group S4 of the second bridge arm 5 to be on in a first time period of the second half cycle to cause the second battery module 32 to discharge and the second inductor L2 to store energy; and control the upper switch group S3 of the second bridge arm 5 to be on and the lower switch group S4 of the second bridge arm 5 to be off in a second time period of the second half cycle to cause the second inductor L2 to release the stored energy and the first battery module 31 to charge.

When the self-heating of the second battery pack 3 is implemented, in the first time period of the second half cycle, the upper switch group S3 of the second bridge arm 5 may be controlled to be off, and the lower switch group S4 of the second bridge arm 5 may be controlled to be on to cause the second battery module 32, the lower switch group S4 of the second bridge arm 5, and the second inductor L2 to form a loop (refer to FIG. 4(c)), the second battery module 32 to discharge, and the second inductor L2 to store the energy released by the second battery module 32; in a second time period of the second half cycle, after the second inductor L2 completes energy storage, the upper switch group S3 of the second bridge arm 5 may be controlled to be on, and the lower switch group S4 of the second bridge arm 5 may be controlled to be off to cause the second inductor L2, the upper switch group S3 of the second bridge arm 5, and the first battery module 31 to form a loop (refer to FIG. 4(d)), and the second inductor L2 to release the stored energy to the first battery module 31 through the upper switch group S3 of the second bridge arm 5.

In an embodiment of the present disclosure, a bridge arm of a motor controller may be reused as the second bridge arm 5 and a coil of a motor may be reused as the second inductor L2. The three phases of second bridge arms 5 in FIG. 1 may be equivalent to the reuse of the motor controller. The three phases of second inductors L2 in FIG. 1 may be equivalent to the motor.

In the energy conversion device 100 in this embodiment of the present disclosure, the first battery pack 1 and the second battery pack 3 may be heated by each other in low-temperature environments, and the second battery pack 3 may also be self-heated, thus ensuring the charging and discharging performance of the power battery in low-temperature environments and also ensuring the all-weather optimal power output of the battery.

In an embodiment of the present disclosure, as shown in FIG. 5, the energy conversion device 100 may further include: a DC charging port 6 and a switching circuit. A first end of the switching circuit is connected to a positive electrode of the DC charging port 6. A second end of the switching circuit is selectively connected to the positive electrode of the first battery pack 1 and the positive electrode of the second battery pack 3.

In some embodiments, as shown in FIG. 5, the switching circuit may include: a first switch 7 and a second switch 8. A first end of the first switch 7 and a first end of the second switch 8 are both connected to a second end of the DC charging port. A second end of the first switch 7 is connected to the positive electrode of the first battery pack 1. A second end of the second switch 8 is connected to the positive electrode of the second battery pack 3. The controller is respectively connected to a control end of the first switch 7 and a control end of the second switch 8, and is configured to control the on/off of the first switch 7 and the second switch 8 to charge the first battery pack 1 and/or the second battery pack 3.

In some embodiments, the DC charging port 6 may be connected to other external charging equipment such as a charging station. After the DC charging port 6 is connected to other external charging equipment, the on and off of the first switch 7 or the second switch 8 may be controlled according to whether the first battery pack 1 or the second battery pack 3 needs to charge firstly, so as to charge the first battery pack 1 or the second battery pack 3 firstly.

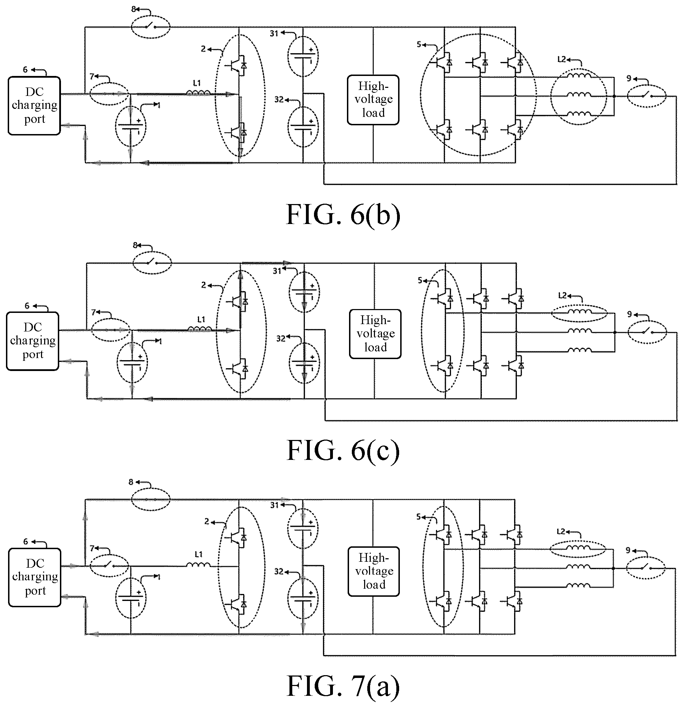

In an embodiment of the present disclosure, as shown in FIG. 6(a), FIG. 6(b), and FIG. 6(c), the controller 4 is connected to the switching circuit and the controller 4 is configured to: in a third state, control the switching circuit to be connected to the positive electrode of the first battery pack 1 to charge the first battery pack 1, and control the first bridge arm 2 to supply power to the second battery pack 3.

When the first battery pack 1 and the second battery pack 3 have a charging demand, the energy conversion device 100 may be controlled to enter the third state, that is, the first switch 7 is controlled to be on and the second switch 8 is controlled to be off to cause the external charging equipment and the first battery pack 1 to form a charging loop (refer to FIG. 6(a)), and the external charging equipment to charge the first battery pack 1. When the first battery pack 1 charges, the upper switch group S1 of the first bridge arm 2 may be controlled to be off, and the upper switch group S2 of the first bridge arm 2 may be controlled to be on to cause the external charging equipment to charge the first battery pack 1 and the first inductor L1 to simultaneously store energy (refer to FIG. 6(b)). After the first inductor L1 completes energy storage, the upper switch group S1 of the first bridge arm 2 may be controlled to be on and the upper switch group S2 of the first bridge arm 2 may be controlled to be off to cause the external charging equipment to charge the first battery pack 1 and simultaneously to charge the second battery pack 3 ((refer to FIG. 6(c)).

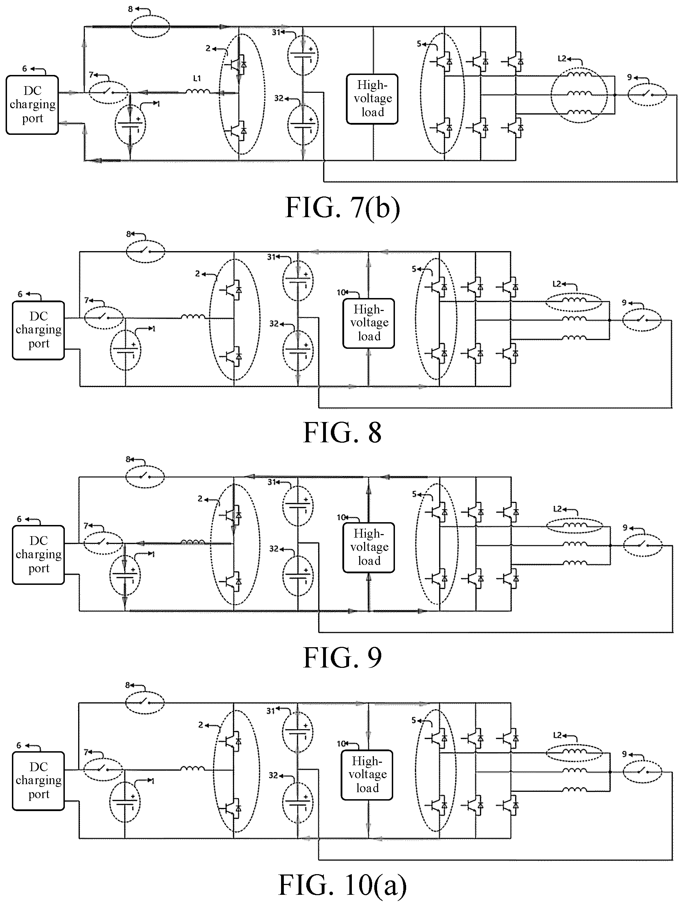

In an embodiment of the present disclosure, as shown in FIG. 7(a) and FIG. 7(b), the controller 4 is connected to the switching circuit and the controller 4 is configured to: in a fourth state, control the switching circuit to be connected to the positive electrode of the second battery pack 3 to charge the second battery pack 3, and control the first bridge arm 2 to supply power to the first battery pack 1.

When the first battery pack 1 and the second battery pack 3 have a charging demand, the energy conversion device 100 may be controlled to enter the fourth state, that is, the first switch 7 is controlled to be off and the second switch 8 is controlled to be on to cause the external charging equipment and the second battery pack 3 to form a charging loop (refer to FIG. 7(a)), and the external charging equipment to charge the second battery pack 3. At the same time as the external charging equipment charges the second battery pack 3, the upper switch group S1 of the first bridge arm 2 may be controlled to be on, and the lower switch group S2 of the first bridge arm 2 may be controlled to be off to cause the external charging equipment to charge the second battery pack 3 and simultaneously to charge the first battery pack 1 through the first inductor L1 (refer to FIG. 7 (b)).

In an embodiment of the present disclosure, the energy conversion device 100 may further include: a switching element 9. A first end of the switching element 9 is connected to midpoints of the first battery module 31 and the second battery module 32. A second end of the switching element 9 is connected to an N line led out from the motor.

In some embodiments, in order to distinguish between self-heating and non-self-heating conditions of the second battery pack 3, a switching element 9 may be arranged between an N point of the motor and the midpoints of the first battery module 31 and the second battery module 32. By controlling the on and off of the switching element 9, the self-heating and non-self-heating conditions of the second battery pack 3 may be distinguished. When the switching element 9 is turned off, the first battery module 31 and the second battery module 32 may be alternately heated to achieve the self-heating of the second battery pack 3.

In an embodiment of the present disclosure, the controller 4 is configured to: control the motor controller to store braking feedback energy in the second battery pack 3 (refer to FIG. 8); or, control the motor controller and the first bridge arm 2 to store braking feedback energy in the first battery pack 1 (refer to FIG. 9).

In some embodiments, when the vehicle is in a braking feedback state, a high-voltage load 10 may directly feed back the energy to the second battery pack 3, or may feed back the energy to the first battery pack 1 through the second bridge arm 2 and the first inductor L1. Referring to FIG. 8, the motor controller may be controlled to cause the high-voltage load 10 and the motor controller to directly feed back the energy to the second battery pack 3. Referring to FIG. 9, the motor controller may be controlled, the upper switch group S1 of the first bridge arm 2 may be controlled to be on and the lower switch group S2 of the first bridge arm 2 may be controlled to be off to cause the high-voltage load 10 and the motor controller to feed back the energy to the first battery pack 1 through the upper switch group S1 of the first bridge arm 2.

It is to be noted that the above two feedback methods may be freely combined at the same time or different time.

In an embodiment of the present disclosure, the energy conversion device 100 may further include: a high-voltage load 10. A first end of the high-voltage load 10 is connected to the positive electrode of the first battery module 31. A second end of the high-voltage load 10 is connected to the negative electrode of the second battery module 32. The controller 4 is further configured to: control the second battery pack 3 to supply power to the high-voltage load, or control the upper switch group S1 of the second bridge arm 2 to be on and the lower switch group S2 of the first bridge arm 2 to be off to cause the second battery pack 3 to charge the first battery pack 1; and control the upper switch group S1 of the first bridge arm 2 to be on and the lower switch group S2 of the first bridge arm 2 to be off to cause the first battery pack 1 to supply power to the high-voltage load or to charge the second battery pack 3 through the upper switch group S1 of the first bridge arm 2.

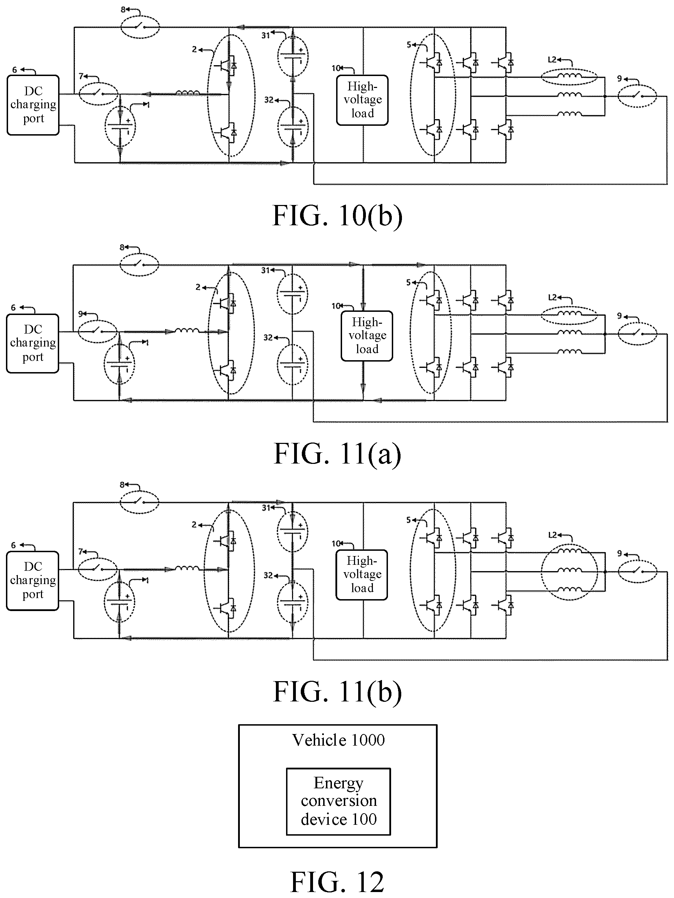

In some embodiments, when the vehicle requires high-power discharging, the second battery pack 3 may directly discharge to the high-voltage load and the illustrated reused motor (refer to FIG. 10(a)). The second battery pack 3 may also charge the first battery pack 1 (refer to FIG. 10(b)). It is to be noted that the above two functions may be freely combined at the same time or different time.

It is to be noted that according to the load situation, the first battery pack 1 and/or the second battery pack 3 may be selected to supply power to the load.

In some embodiments, when the vehicle requires high-power discharging, the first battery pack 1 may discharge to the high-voltage load 10 through the first inductor L1 and the second bridge arm 2 (refer to FIG. 11(a)). The first battery pack 1 may also charge the second battery pack 3 through the first inductor L1 and the second bridge arm 2 (refer to FIG. 11(b)). It is to be noted that the above two functions may be freely combined at the same time or different time.

It is to be noted that the self-heating function of the second battery pack 3 may be implemented simultaneously with the charging and driving functions, that is, the vehicle may achieve self-heating during charging and self-heating during driving (running), which will not be repeated here.

In an embodiment of the present disclosure, when the voltage of the second battery pack 3 is lower than the voltage of the first battery pack 1, the first bridge arm 2 may adopt a buck DC circuit, as shown in FIG. 2.

As shown in FIG. 2, the energy conversion device includes: a first battery pack 1; a first bridge arm 2, a first end of the first bridge arm 2 being connected to a positive electrode of the first battery pack 1, and a second end of the first bridge arm 2 being connected to a negative electrode of the first battery pack 1; a third inductor L3, a first end of the third inductor L3 being connected to a midpoint of the first bridge arm 2; a second battery pack 3, a positive electrode of the second battery pack 3 being connected to a second end of the third inductor L3, and a negative electrode of the second battery pack 3 being connected to the second end of the first bridge arm 2; and a controller 4, the controller 4 being connected to the first bridge arm 2 and the controller 4 being configured to: control the first bridge arm 2 in a first state to cause the first battery pack 1 and the second battery pack 3 to alternately charge and discharge to heat the first battery pack 1 and the second battery pack 3.

It is to be noted that the working modes of the energy conversion device 100 using the circuit structure shown in FIG. 2 when the first battery pack 1 and the second battery pack 3 are alternately heated, the second battery pack 3 is self-heated, and the first battery pack 1 and the second battery pack 3 perform high-power discharging are similar to the working modes of the energy conversion device 100 shown in FIG. 1, which will not be repeated here.

In the energy conversion device provided in this embodiment of the present disclosure, the first battery pack 1 and the second battery pack 3 may be alternately heated in low-temperature environments, thus achieving the simultaneous heating of the first battery pack 1 and the second battery pack 3. The second battery pack 3 may also be self-heated, thus ensuring the charging and discharging performance of the batteries by heating the first battery pack 1 and the second battery pack 3 in low-temperature environments. The first battery pack 1 and the second battery pack 3 of different chemical forms are adopted to overcome the shortcomings of any form of power battery when providing power energy to the vehicle, thus making the vehicle have better power performance and meet the requirement on the mile range. The first battery pack 1 and the second battery pack 3 function cooperatively in a redundant configuration. When one battery fails, the system can still work normally, thus improving the system stability and achieving extremely high robustness. The first battery pack 1 and the second battery pack 3 may supply power to the load separately or jointly according to the load input requirement. The load may feed back energy to the first battery pack 1 and the second battery pack 3 separately or simultaneously according to the actual situation. The high-voltage load is supplied with power through different power sources (the first battery pack 1 and the second battery pack 3).

The present disclosure further provides a vehicle.

In an embodiment of the present disclosure, as shown in FIG. 12, a vehicle 1000 may include the energy conversion device 100.

The vehicle 1000 provided in this embodiment of the present disclosure utilizes the energy conversion device 100 described above to supply power to the vehicle load. As a result, in the vehicle 1000 with the energy conversion device 100, the first battery pack 1 and the second battery pack 3 may be simultaneously heated in low-temperature environments. The second battery pack 3 may also be self-heated to heat the battery pack in low-temperature environments, thus ensuring the charging and discharging performance of the batteries of the vehicle 1000. The first battery pack 1 and the second battery pack 3 of different chemical forms are adopted to overcome the shortcomings of any form of power battery when providing power energy to the vehicle 1000, thus making the vehicle 1000 have better power performance and meet the requirement of the vehicle 1000 on the mileage range. The first battery pack 1 and the second battery pack 3 function cooperatively in a redundant configuration. When one battery fails, the vehicle 1000 can still work normally, thus improving the stability of the vehicle 1000 and achieving extremely high robustness.

It is to be noted that the logic and/or steps shown in the flowcharts or described in any other manner herein, for example, a sequenced list that may be considered as executable instructions used for implementing logical functions, may be specifically implemented in any computer-readable medium to be used by an instruction execution system, device, or equipment (for example, a computer-based system, a system including a processor, or another system that may obtain an instruction from the instruction execution system, device, or equipment and execute the instruction) or to be used by combining such instruction execution systems, devices, or equipment. In the specification, the "computer-readable medium" may be any device that may include, store, communicate, propagate, or transmit programs to be used by the instruction execution system, device or equipment or to be used in combination with the instruction execution system, device or equipment. More specific examples (a non-exhaustive list) of the computer-readable medium may include the following: an electrical connection (electronic device) having one or more wires, a portable computer diskette (magnetic device), a Random Access Memory (RAM), a Read-Only Memory (ROM), an Erasable Programmable Read-Only Memory (EPROM or flash memory), an optical fiber device, and a portable Compact Disk Read-Only Memory (CDROM). In addition, the computer-readable medium may even be paper or other suitable media on which the program may be printed, because the program may be obtained electronically by, for example, optically scanning paper or other media, then editing, interpreting, or processing in other suitable ways if necessary, and then storing it in a computer memory.

It should be understood that parts of the present disclosure may be implemented by using hardware, software, firmware, or a combination thereof. In the above implementations, multiple steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

In the description of this specification, the description with reference to terms "an embodiment", "some embodiments", "an example", "a specific example", "some examples" and the like means that specific features, structures, materials or characteristics described in combination with the embodiment(s) or example(s) are included in at least one embodiment or example of the present disclosure. In this specification, exemplary descriptions of the above terms do not necessarily refer to the same embodiment or example. In addition, the described specific features, structures, materials, or characteristics may be combined in a proper manner in any one or more of the embodiments or examples.

In the description of the present disclosure, it is to be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only to facilitate the description of the present disclosure and to simplify the description, rather than indicating or implying that the mentioned device or component must have a particular orientation or must be constructed and operated in a particular orientation. Therefore, such terms cannot be construed as limiting of the present disclosure.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present disclosure, unless explicitly specified, "multiple" means at least two, for example, two or three.

In the present disclosure, unless otherwise explicitly specified and limited, the terms "mount", "connect", "connection", and "fix" are understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. Those skilled in the art may understand specific meanings of the terms in the present disclosure based on specific situations.

In the present disclosure, unless otherwise explicitly specified or defined, a first feature being located "above" or "below" a second feature may be that the first feature is in a direct contact with the second feature, or the first feature is in an indirect contact with the second feature through an intermediary. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

Although the embodiments of the present disclosure have been shown and described above, it may be understood that the above embodiments are exemplary and cannot be understood as limitations to the present disclosure. Those skilled in the art may make changes, modifications, replacements, or variations to the above embodiments within the scope of the present disclosure.

## Claims

1. An energy conversion device, comprising:
a first battery pack;
a first inductor, a first end of the first inductor being connected to a positive electrode of the first battery pack;
a first bridge arm, a midpoint of the first bridge arm being connected to a second end of the first inductor, and a first end of the first bridge arm being connected to a negative electrode of the first battery pack;
a second battery pack, a positive electrode of the second battery pack being connected to a second end of the first bridge arm, and a negative electrode of the second battery pack being connected to the first end of the first bridge arm; and
a controller, the controller being connected to the first bridge arm and the controller being configured to: control the first bridge arm in a first state to cause the first battery pack and the second battery pack to alternately charge and discharge to heat the first battery pack and the second battery pack.

2. The energy conversion device according to claim 1, wherein the controller is configured to:
in the first state, control the first bridge arm in a first half cycle of a control cycle to cause the first battery pack to discharge and the second battery pack to charge; and
control the first bridge arm in a second half cycle of the control cycle to cause the first battery pack to charge and the second battery pack to discharge.

3. The energy conversion device according to claim 2, wherein the controller is configured to:
in the first state, control an upper switch group of the first bridge arm to be off and a lower switch group of the first bridge arm to be on in a first time period of the first half cycle to cause the first battery pack to discharge and the first inductor to store energy; and
control the upper switch group of the first bridge arm to be on and the lower switch group of the first bridge arm to be off in a second time period of the first half cycle to cause the first battery pack to discharge, the first inductor to release the stored energy, and the second battery pack to charge.

4. The energy conversion device according to claim 2, wherein the controller is configured to:
in the first state, control the upper switch group of the first bridge arm to be on and the lower switch group of the first bridge arm to be off in a first time period of the second half cycle to cause the second battery pack to discharge, the first inductor to store energy, and the first battery pack to charge; and
control the upper switch group of the first bridge arm to be off and the lower switch group of the first bridge arm to be on in a second time period of the second half cycle to cause the first inductor to release the stored energy and the first battery pack to charge.

5. The energy conversion device according to claim 1, wherein the second battery pack comprises a first battery module and a second battery module connected in series, a positive electrode of the first battery module is connected to the second end of the first bridge arm, and a negative electrode of the second battery module is connected to the first end of the first bridge arm;
the energy conversion device further comprising:
at least one phase of second bridge arm, a first end of the second bridge arm being connected to the negative electrode of the second battery module, and a second end of the second bridge arm being connected to the positive electrode of the first battery module; and
at least one phase of second inductor, a first end of the second inductor being connected to a midpoint of the corresponding second bridge arm, and a second end of the second inductor being connected to midpoints of the first battery module and the second battery module; and
the controller being connected to the second bridge arm and the controller being configured to: control the second bridge arm in a second state to cause the first battery module and the second battery module to alternately charge and discharge to heat the first battery module and the second battery module.

6. The energy conversion device according to claim 5, wherein the controller is configured to:
in the second state, control the second bridge arm in a first half cycle of a control cycle to cause the first battery module to discharge and the second battery module to charge; and
control the second bridge arm in a second half cycle of the control cycle to cause the first battery module to charge and the second battery module to discharge.

7. The energy conversion device according to claim 6, wherein the controller is configured to:
in the second state, control an upper switch group of the second bridge arm to be on and a lower switch group of the second bridge arm to be off in a first time period of the first half cycle to cause the first battery module to discharge and the second inductor to store energy; and
control the upper switch group of the second bridge arm to be off and the lower switch group of the second bridge arm to be on in a second time period of the first half cycle to cause the second inductor to release the stored energy and the second battery module to charge.

8. The energy conversion device according to claim 6, wherein the controller is configured to:
in the second state, control an upper switch group of the second bridge arm to be off and a lower switch group of the second bridge arm to be on in a first time period of the second half cycle to cause the second battery module to discharge and the second inductor to store energy; and
control the upper switch group of the second bridge arm to be on and the lower switch group of the second bridge arm to be off in a second time period of the second half cycle to cause the second inductor to release the stored energy and the first battery module to charge.

9. The energy conversion device according to claim 5, wherein
a bridge arm of a motor controller is reused as the second bridge arm and a coil of a motor is reused as the second inductor.

10. The energy conversion device according to any one of claims 1 to 9, further comprising:
a DC charging port; and
a switching circuit, a first end of the switching circuit being connected to a positive electrode of the DC charging port, and a second end of the switching circuit being selectively connected to the positive electrode of the first battery pack and the positive electrode of the second battery pack.

11. The energy conversion device according to claim 10, wherein
the controller is connected to the switching circuit and the controller is configured to: in a third state, control the switching circuit to be connected to the positive electrode of the first battery pack to charge the first battery pack, and control the first bridge arm to supply power to the second battery pack.

12. The energy conversion device according to claim 10, wherein
the controller is connected to the switching circuit and the controller is configured to: in a fourth state, control the switching circuit to be connected to the positive electrode of the second battery pack to charge the second battery pack, and control the first bridge arm to supply power to the first battery pack.

13. The energy conversion device according to claim 1, wherein the first battery pack is an energy type battery, the second battery pack is a power type battery, and a charging and discharging rate of the power type battery is greater than a charging and discharging rate of the energy type battery.

14. The energy conversion device according to claim 9, further comprising:
a switching element, a first end of the switching element being connected to midpoints of the first battery module and the second battery module, and a second end of the switching element being connected to an N line led out from the motor.

15. The energy conversion device according to claim 9, wherein
the controller is configured to: control the motor controller to store braking feedback energy in the second battery pack; or, control the motor controller and the first bridge arm to store braking feedback energy in the first battery pack.

16. A vehicle, comprising an energy conversion device according to any one of claims 1 to 15.
